# EUROPEAN PATENT APPLICATION

(11) **EP 4 166 680 A1**
(43) Date of publication of application: **19.04.2023**
(21) Application number: 21825581.8
(22) Date of filing: 18.05.2021
(51) Int. Cl.: C21C 7/00, C21D 6/00, C21D 9/46, C22C 38/00, C22C 38/58

(54) **PRECIPITATION-HARDENING TYPE MARTENSITIC STAINLESS STEEL SHEET HAVING EXCELLENT FATIGUE RESISTANCE**

(30) Priority: 15.06.2020 JP 2020102839
(71) Applicant: NIPPON STEEL Stainless Steel Corporation, Tokyo 100-0005 (JP)
(72) Inventor: SAITO, Shun, Tokyo 100-0005 (JP); FUKUMOTO, Shigeo, Tokyo 100-0005 (JP); EBIHAMA, Nobuhisa, Tokyo 100-0005 (JP); TANAKA, Akira, Tokyo 100-0005 (JP)
(74) Representative: Papula Oy
(86) International application number: PCT/JP2021/018738
(87) International publication number: WO 2021/256145

(57) **Abstract**

A precipitation-hardening type martensitic stainless steel sheet with excellent fatigue resistance according to the present invention has a composition comprising, by mass%, C: 0.080% or less, Si: 0.70 to 3.00%, Mn: 3.00% or less, Ni: 6.00 to 10.00%, Cr: 10.00% to 17.00%, P: 0.050% or less, S: 0.003% or less, Cu: 0.50 to 2.00%, Mo: 0.50 to 3.00%, Ti: 0.15 to 0.45%, Al: 0.070% or less, Ca: 0.0020% or less, Mg: 0.0020% or less, N: 0.015% or less, and O: 0.0070% or less, with the balance being Fe and inevitable impurities. Specific nonmetallic inclusions with an equivalent circle diameter of 10 um or more are not present among nonmetallic inclusions existing in a matrix phase, or even when the specific nonmetallic inclusions are present, a number density thereof is 0.100 pieces/mm² or less.

## Description

### TECHNICAL FIELD

The present invention relates to a precipitation-hardening type martensitic stainless steel sheet with excellent fatigue resistance.

### BACKGROUND ART

Precipitation-hardening type martensitic stainless steel sheets have low hardness before an aging treatment, and thus have excellent punching workability and forming workability. In addition, the stainless steel sheets after the aging treatment have high weld softening resistance while exhibiting high strength.

Therefore, the precipitation-hardening type martensitic stainless steel sheets have been heavily used as structural materials such as steel belts that require welding and a variety of spring materials, by utilizing properties that change before and after the aging treatment. Furthermore, these materials are also required to have excellent fatigue resistance.

As a means of improving fatigue resistance, it is effective to fine inclusions existing in a matrix phase. However, the precipitation-hardening type martensitic stainless steel sheet usually includes Si, Cu and Ti as precipitation-hardening elements, and thus N, which is inevitably contained in the steel, tends to react with Ti to easily generate coarse and angular TiN nonmetallic inclusions.

In addition, in the precipitation-hardening type martensitic stainless steel sheet, oxide-based nonmetallic inclusions and composite oxynitride nonmetallic inclusions of TiN and an oxide are easily generated as deoxidation products. Therefore, in order to improve fatigue resistance, it is desired to reduce the size of all of these nonmetallic inclusions.

Furthermore, Si contained in a steel has an action of increasing the activity of Ti, and thus there is also a problem in that it is difficult to suppress the generation and growth of TiN and composite oxynitride of TiN and an oxide.

A means for fining TiN inclusions in a steel, Patent Document 1, for example, discloses a maraging steel exhibiting a martensite structure with an excellent fatigue property. The maraging steel includes adding Zr to a molten steel to generate a fine Zr oxide, whereby TiN inclusions finely crystallize using the fine Zr oxide as a nucleus, and also, N is fixed as ZrN to suppress the formation of TiN.

The maraging steel described in Patent Document 1 is, however, premised on being produced by using a vacuum arc remelting method, and a N content is required to be reduced to 0.0020 mass% or less. It is difficult to achieve such a low N content from the viewpoint of cost constraints when the precipitation-hardening type martensitic steel is produced by a commonly used mass production method which is carried out in the order of melting (electric furnace), first refining (converter), second refining (AOD or VOD), and continuous casting, which are common production steps. Furthermore, there is also a problem that an immersion nozzle easily clogs during continuous casting by adding Zr to a molten steel. In addition, since the martensitic steel described in Patent Document 1 does not contain Si which increases the activity of Ti, it can be said that suppressing the generation of TiN is relatively easy compared to a case of a martensitic steel containing Si.

In addition, Patent Document 2 discloses a cold-rolled strip of maraging steel in which the size of oxide-based nonmetallic inclusions remaining in the steel strip is reduced by adding a small amount of Mg.

However, the cold-rolled strip of maraging steel described in Patent Document 2 is also premised on being produced by using a vacuum arc remelting (VAR) method or vacuum induction melting (VIM) method, and N content is required to be reduced to 0.0030 mass% or less. There is thus a problem that it is difficult to achieve such a low N content from the viewpoint of cost constraints when the precipitation-hardening type martensitic steel is produced by the above-described production method having common production steps. In addition, the martensitic steel described in Patent Document 2 achieves reduction in the sizes of nitride-based nonmetallic inclusions and oxide-based nonmetallic inclusions by respectively different methods, and does not disclose to reduce the sizes of various nonmetallic inclusions (to fine size) as a whole. Additionally, it can be said that it is relatively easy to suppress the generation of TiN, since Si, which increases the activity of Ti, is not contained.

Patent Document 1: Japanese Unexamined Patent Application, Publication No. 2019-11515
Patent Document 2: Japanese Patent No. 4110518

### DISCLOSURE OF THE INVENTION

### Problems to be Solved by the Invention

It is thus an object of the present invention is to provide a precipitation-hardening type martensitic stainless steel sheet with an excellent fatigue resistance, in which the number density of large nonmetallic inclusions existing in a matrix phase can be restricted, by reducing (fining) the size of nonmetallic inclusions, which have different compositions and which are contained in the steel, such as nitrides (e.g. TiN) and oxides (e.g., Al₂O₃, MgO and Ti₂O₃), as a whole, even when the martensitic stainless steel sheet contains Si in a steel, does not excessively limit N content, and is produced, for example, by a commonly used mass production method which is carried out in the order of melting (electric furnace), first refining (converter), second refining (AOD or VOD), and continuous casting.

### Means for Solving the Problems

As a result of diligently investigating improvement in fatigue resistance in the precipitation-hardening type martensitic stainless steel sheets, the present inventors have found that it is very effective that among nonmetallic inclusions existing in a matrix phase, nonmetallic inclusions with an equivalent circle diameter of 10 um or more (hereinafter, may be referred to as "specific nonmetallic inclusions") are not present, or even when the specific nonmetallic inclusions are present, the number density of the specific nonmetallic inclusions is 0.100 pieces/mm² or less, and the present invention has been completed based on such findings.

That is, the gist configuration of the present invention is as follows:
A first aspect relates to a precipitation-hardening type martensitic stainless steel sheet with excellent fatigue resistance, having a composition comprising, by mass%, C: 0.080% or less, Si: 0.70 to 3.00%, Mn: 3.00% or less, Ni: 6.00 to 10.00%, Cr: 10.00% to 17.00%, P: 0.050% or less, S: 0.003% or less, Cu: 0.50 to 2.00%, Mo: 0.50 to 3.00%, Ti: 0.15 to 0.45%, Al: 0.070% or less, Ca: 0.0020% or less, Mg: 0.0020% or less, N: 0.015% or less, and O: 0.0070% or less, with the balance being Fe and inevitable impurities. In the precipitation-hardening type martensitic stainless steel sheet, among nonmetallic inclusions existing in a matrix phase, nonmetallic inclusions with an equivalent circle diameter of 10 µm or more are not present, or even when the nonmetallic inclusions having an equivalent circle diameter of 10 µm or more are present, the number density thereof is 0.100 pieces/mm² or less.

A second aspect relates to the precipitation-hardening type martensitic stainless steel sheet as described in the first aspect, wherein, when a total mass of Al₂O₃, MgO and Ti₂O₃ obtained by analyzing average composition components of compounds contained in the nonmetallic inclusions with an equivalent circle diameter of 10 µm or more is made 100 mass%, the mass percentages (%) of Al₂O₃, MgO and Ti₂O₃ satisfy at least one range selected from the range (I) obtained from formulae (1) to (3) and the range (II) obtained from formulae (4) to (6) shown below:

### <Range (I)>

[Al₂O₃] + [MgO] + [Ti₂O₃] = 100 ·· (1)

[Ti₂O₃] ≥ 40 (2)

[Al₂O₃] + [MgO] ≤ 60 (3)

### <Range (II)>

[Al₂O₃] + [MgO] + [Ti₂O₃] = 100 ·· (4)

0 ≤ [Ti₂O₃] ≤ 100 (5)

[Al₂O₃]/102 ≥ [MgO]/40.3 (6),

and in the formulae, [Al₂O₃], [MgO] and [Ti₂O₃] all mean mass percentage (%).

A third aspect relates to the precipitation-hardening type martensitic stainless steel sheet as described in the first or second aspect, wherein the nonmetallic inclusions with an equivalent circle diameter of 10 um or more existing in the matrix phase have the equivalent circle diameter of 20 um or less.

A fourth aspect relates to the precipitation-hardening type martensitic stainless steel sheet as described in any one of the first to third aspects, wherein, when a stress at which the number of repetitions without breaking reaches 10 million times in a Schenck-type bending and torsion fatigue test is made a fatigue limit stress, the fatigue limit stress is 550 MPa or more.

### Effects of the Invention

According to the present invention, even if the steel contains Si, the N content is not excessively restricted, and the steel is manufactured in a commonly used mass production system in which, for example, melting (electric furnace), first refining (converter), second refining (AOD or VOD), and continuous casting are performed in this order, the size of non-metallic inclusions with different compositions, such as nitrides (e.g., TiN) and oxides (e.g., Al₂O₃, MgO, and Ti₂O₃) in steel can be reduced (refined) as a whole, and large-sized specific non-metallic inclusions in the matrix phase are not present or the number density of specific non-metallic inclusions can be restricted, so that it is possible to provide precipitation-hardened martensitic stainless steel sheets with excellent fatigue resistance.

### BRIEF DESCRIPTION OF THE DRAWINGS

FIG. 1 is a ternary phase diagram for Al₂O₃-MgO-Ti₂O₃, forming nonmetallic inclusions existing in the matrix phase of the precipitation-hardening type martensitic stainless steel sheet according to the present invention;
FIG. 2 is a graph obtained by plotting the number density (pieces/mm²) of specific nonmetallic inclusions existing in a matrix phase in sample Nos. 1 to 24 shown in Table 1 on the horizontal axis, and fatigue limit stress (MPa) on the vertical axis;
FIG. 3 is a graph obtained by plotting sample Nos. 1 to 24 shown in Table 1 on the horizontal axis, and fatigue limit stress (MPa) on the vertical axis;
FIG. 4 is a reflected electron compositional image of specific nonmetallic inclusions with a size of 10 µm or more existing in the stainless steel sheet of sample No. 23, which is Comparative Example; and
FIG. 5 is a reflected electron compositional image of specific nonmetallic inclusions with a size of 10 um or more existing in the stainless steel sheet of sample No. 11, which is Inventive Example.

### PREFERRED MODE FOR CARRYING OUT THE INVENTION

A preferred embodiment of the precipitation-hardening type martensitic stainless steel sheet of the present invention will now be described in detail. The precipitation-hardening type martensitic stainless steel sheet in accordance with the present invention is a precipitation-hardening type martensitic stainless steel sheet with excellent fatigue resistance, having a composition comprising, by mass%, C: 0.080% or less, Si: 0.70 to 3.00%, Mn: 3.00% or less, Ni: 6.00 to 10.00%, Cr: 10.00% to 17.00%, P: 0.050% or less, S: 0.003% or less, Cu: 0.50 to 2.00%, Mo: 0.50 to 3.00%, Ti: 0.15 to 0.45%, Al: 0.070% or less, Ca: 0.0020% or less, Mg: 0.0020% or less, N: 0.015% or less, and O: 0.0070% or less, with the balance being Fe and inevitable impurities. In the precipitation-hardening type martensitic stainless steel sheet, among nonmetallic inclusions existing in a matrix phase, specific nonmetallic inclusions with an equivalent circle diameter of 10 µm or more are not present, or even when the specific nonmetallic inclusions are present, the number density of the specific nonmetallic inclusions is 0.100 pieces/mm² or less.

### (1) Alloy composition

The alloy composition of the precipitation-hardening type martensitic stainless steel sheet of the present invention and the action thereof will be described. The precipitation-hardening type martensitic stainless steel sheet of the present invention has the composition comprising, by mass%, C: 0.080% or less, Si: 0.70 to 3.00%, Mn: 3.00% or less, Ni: 6.00 to 10.00%, Cr: 10.00% to 17.00%, P: 0.05% or less, S: 0.003% or less, Cu: 0.50 to 2.00%, Mo: 0.50 to 3.00%, Ti: 0.15 to 0.45%, Al: 0.070% or less, Ca: 0.0020% or less, Mg: 0.0020% or less, N: 0.015% or less, and O: 0.0070% or less, with the balance being Fe and inevitable impurities. It should be noted that "mass%" is simply described as "%" in the description of each component in the alloy composition below.

### <C: 0.080% or less>

C (carbon) is an element which enhances the strength of a steel and is effective to suppress the δ ferrite phase generated at high temperatures. However, when the C content is above 0.080%, the hardness of the martensite phase generated by quenching is increased, and the cold working deformability is reduced. As a result, the forming workability becomes insufficient and also, it becomes difficult to obtain a single-phase martensite structure by cooling after a solution treatment. Furthermore, when the C content is above 0.080%, the generation of TiC is promoted in an annealed state, and toughness is reduced. Therefore, the C content is made 0.080% or less.

### <Si: 0.70 to 3.00%>

Si (silicon) is an element which has a great solid solution strengthening ability and the action of strengthening matrices. In addition, fine coherent precipitates of intermetallic compounds including elements such as Si, Ti and Ni are generated during an aging treatment by compound addition with Ti and Ni to enhance the strength of a steel. Such action is remarkable when the Si content is 0.70% or more. However, when Si content is above 3.00%, the generation of the δ ferrite phase is promoted, and the strength and toughness are reduced. Therefore, the Si content is made 0.70 to 3.00%.

### <Mn: 3.00% or less>

Mn (manganese) is an element which has the action of suppressing the generation of the δ ferrite phase in a high temperature region. However, when the Mn content is above 3.00%, the decrease of toughness in a welded portion and a decrease of welding workability are easily caused. Therefore, the Mn content is made 3.00% or less.

<Ni: 6.00 to 10.00%>

Ni (nickel) is an element which contributes to precipitation hardening and suppresses the generation of the δ ferrite phase. In order not to reduce an age-hardening ability and to maintain high strength and high toughness, the precipitation-hardening type martensitic stainless steel sheet of the present invention is required to contain Ni at 6.00% or more. However, when the Ni content is above 10.00%, the amount of austenite phase remaining after quenching increases, and thus the strength required is not obtained. Therefore, the Ni content is made 6.00 to 10.00%.

### <Cr: 10.00% to 17.00%>

In order to obtain corrosion resistance as a stainless steel, it is required to contain Cr (chromium) of 10.00% or more. However, when the Cr content is above 17.00%, the δ ferrite phase and the retained austenite phase are generated, causing a decrease in strength in the welded portion. Therefore, the Cr content is made a range of 10.00 to 17.00%.

### <P: 0.050% or less>

P (phosphorus) is an impurity, and is an element which promotes hot workability and solidification cracking at the time of production, and also reduces ductility due to hardening. In this respect, a lower P content is more preferred, and thus the upper limit thereof is made 0.050%.

### <S: 0.003% or less>

S (sulfur) exists as nonmetallic inclusions such as MnS in a steel, and adversely affects fatigue strength, toughness, corrosion resistance, and the like. In this respect, a lower S content is more preferred, and thus the upper limit thereof is made 0.003%.

### <Cu: 0.50 to 2.00%>

Cu (copper) is an effective element to ensure corrosion resistance under a sulfurous acid gas-based corrosive environment, and when the Cu content is 0.50% or more, the enhancement of corrosion resistance becomes prominent. However, when the Cu content is above 2.00%, hot workability deteriorates, and defects such as cracks may occur on the processed material surface. In addition, the toughness tends to decrease when the strength is increased. Therefore, the Cu content is made 0.50 to 2.00%.

### <Mo: 0.50 to 3.00%>

Mo (molybdenum) is an element which has the action of enhancing strength and toughness. It is required that the Mo content be 0.50% or more to exhibit such an action. However, when Mo content is above 3.00%, not only the effect of enhancing the strength and the toughness corresponding to the increase in the Mo content cannot be obtained, but also the generation of the δ ferrite phase is promoted and the strength of the welded portion is easily reduced. Therefore, the Mo content is made 0.50 to 3.00%.

### <Ti: 0.15 to 0.45%>

Ti (titanium) is an element which contributes to precipitation hardening, and it is required to contain 0.15% or more of Ti to obtain high strength. However, when Ti of more than 0.45% is contained, the decrease of the toughness is generated due to excessive precipitation hardening reactions. Therefore, the Ti content is made 0.15 to 0.45%.

### <Al: 0.070% or less>

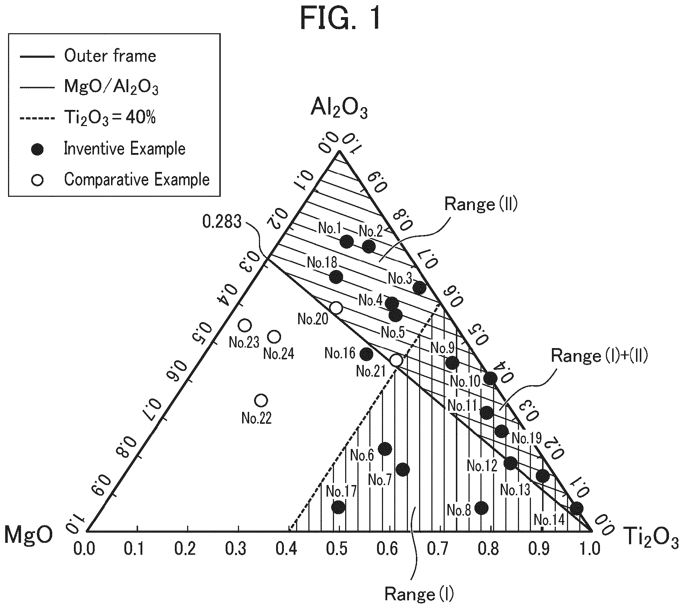

Al (aluminum) acts as a deoxidation agent, and generates MgO·Al₂O₃ (spinel)-based inclusions. In order to make the composition range of nonmetallic inclusions existing in a steel within at least one range of the range (I) and range (II) shown in FIG. 1 described later, it is required that the Al content be 0.070% or less, preferably 0.040% or less, and more preferably 0.020 to 0.025%.

### <Ca: 0.0020% or less>

Ca (calcium) is an element which contributes to an improvement in hot workability. However, when Ca is above 0.0020%, large-sized CaO-SiO₂-Al₂O₃-based inclusions are easily generated, and when such inclusions exist in a steel, there is a possibility that they may adversely affect fatigue resistance, and also easily cause surface defects. Therefore, the Ca content is made 0.0020% or less.

### <Mg: 0.0020% or less>

Mg (magnesium) is an element that may be added as a deoxidation element, and also makes the slab structure finer to contribute to an enhancement of hot workability and formability. However, when Mg is above 0.0020%, MgO oxide is easily generated. The generated MgO oxide is not preferable because it promotes the generation and growth of TiN as with MgO·Al₂O₃ (spinel)-based inclusions. Therefore, the Mg content is made 0.0020% or less.

### <N: 0.015% or less>

N (nitrogen) has high affinity with Ti, and a part of the Ti component which functions as a precipitation-hardening element is consumed by the generation of TiN. Furthermore, TiN inclusions become larger depending on the increase in the N content, resulting in the decrease in fatigue strength and toughness. Therefore, a lower N content is more preferred; however, the excessive decrease in N increases costs. To this end, in the present invention, the N content is in a range which is easily achieved even when produced, for example, by a commonly used mass production method, carried out in the order of melting (electric furnace), first refining (converter), second refining (AOD or VOD), and continuous casting, that is, is made 0.015% or less.

### <O: 0.0070% or less>

O (oxygen) is a constituent element of oxide-based nonmetallic inclusions, and, when large-sized oxide-based nonmetallic inclusions are generated, they deteriorate the cleanliness of steel, and cause surface defects. To this end, a lower O content is more preferred, and specifically, it is made 0.0070% or less.

### <The balance: Fe and inevitable impurities>

The balance other than the above-described components is Fe (iron) and inevitable impurities. The term "inevitable impurities" referred to here means impurities at a content level that can be inevitably contained in the production steps. Examples of components as inevitable impurities include B, V, Nb, Zr, Hf, W, Sn, Co, Sb, Ta, Ga, Bi, REM and the like. The content of these inevitable impurities may be 0.5% or less for each component, and the total amount of components of inevitable impurities may be 2.0% or less.

### (2) Nonmetallic inclusions existing in matrix phase

In the precipitation-hardening type martensitic stainless steel sheet of the present invention, it is required that among nonmetallic inclusions existing in a matrix phase, the specific nonmetallic inclusions with the equivalent circle diameter of 10 µm or more be not present, or even when the specific nonmetallic inclusions are present, the number density of the specific nonmetallic inclusions be 0.100 pieces/mm² or less.

As a result of studies for improving the fatigue resistance of the precipitation-hardening type martensitic stainless steel sheet having the above composition, the present inventors have found that when nonmetallic inclusions with a larger size among nonmetallic inclusions existing in a matrix phase were present in large quantities, they adversely affect the fatigue properties. The inventors also found that when specific nonmetallic inclusions with the equivalent circle diameter of 10 um or more are not present in a matrix phase, or even when the specific nonmetallic inclusions are present, the fatigue resistance was significantly enhanced by controlling the number density of the specific nonmetallic inclusions to 0.100 pieces/mm² or less. The term "equivalent circle diameter" referred to here means a value converted into the diameter of a circle having an area equal to the projected area of a particle in a nonmetallic inclusion appearing on an observed surface.

As a result of further detailed studies, the present inventors have found that coarse nonmetallic inclusions that adversely affect the fatigue strength are oxynitrides consisting of TiN and oxides, which are coarsely grown as a result of oxides nucleating and promoting the formation of TiN, and the oxide as a nucleus was MgO oxide or MgO·Al₂O₃ (spinel) composite oxide, which have good coherence with TiN.

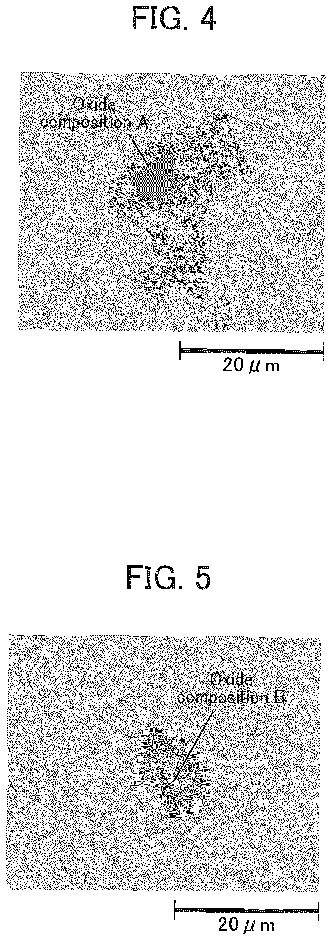

It was further found that because coarse oxynitrides thus generated became very hard when the amount of TiN was more than the amount of oxide in mass percentage (see FIG. 4), they were hardly crushed at the time of hot rolling and cold rolling, and remained in a matrix phase in a coarse state (e.g. a size with the equivalent circle diameter of above 20 um), and consequently, they adversely affect the fatigue properties.

In contrast, it was also found that the generated coarse nonmetallic inclusions (oxynitride), in which the amount of oxide was more than the amount of TiN in mass percentage (see FIG. 5), were easily crushed at the time of hot rolling and cold rolling, and the coarse nonmetallic inclusions are less likely to remain in a matrix phase, so that the fatigue resistance could be significantly enhanced. Therefore, in the present invention, it is preferred that specific nonmetallic inclusions existing in a matrix phase have the equivalent circle diameter of 20 µm or less. As described above, the fatigue resistance can be furthermore enhanced by controlling the size (equivalent circle diameter) of the specific nonmetallic inclusions.

In addition, in the present invention, when the total mass of Al₂O₃, MgO and Ti₂O₃ obtained by analyzing the average composition components of compounds contained in specific nonmetallic inclusions in a matrix phase is made 100 mass%, the existence ratio of TiN, MgO and MgO·Al₂O₃ (spinel) contained in nonmetallic inclusions is restricted by controlling to increase the existence ratio of Ti₂O₃ and Al₂O₃, oxides which easily become nucleuses for coarse specific nonmetallic inclusions, and more specifically, it is preferred that the mass percentages (%) of Al₂O₃, MgO and Ti₂O₃ satisfy at least one range of the range (I) obtained from formulae (1) to (3), and the range (II) obtained from formulae (4) to (6) shown below. Therefore, as the generated coarse specific nonmetallic inclusions are easily crushed at the time of hot rolling and cold rolling, the coarse (for example, a size with the equivalent circle diameter of above 20 µm) specific nonmetallic inclusions are less likely to remain in the matrix phase of a precipitation-hardening type martensitic stainless steel sheet as a final product, and consequently the fatigue resistance can be significantly enhanced.

### <Range (I)>

[Al₂O₃] + [MgO] + [Ti₂O₃] = 100 ·· (1)

[Ti₂O₃] ≥ 40 (2)

[Al₂O₃] + [MgO] ≤ 60 (3)

### <Range (II)>

[Al₂O₃] + [MgO] + [Ti₂O₃] = 100 ·· (4)

0 ≤ [Ti₂O₃] ≤ 100 (5)

[Al₂O₃]/102 ≥ [MgO]/40.3 (6),

and in the formulae, [Al₂O₃], [MgO] and [Ti₂O₃] all mean mass percentage (%).

FIG. 1 shows a ternary phase diagram for Al₂O₃-MgO-Ti₂O₃, forming the nonmetallic inclusions existing in the matrix phase of the precipitation-hardening type martensitic stainless steel sheet of the present invention, and shows the range (I) and range (II) by hatching in respective different directions.

As described above, in the present invention, the fatigue resistance can be enhanced by satisfying at least one range of the range (I) and the range (II), and also the fatigue resistance can be further enhanced by satisfying both the range (I) and the range (II).

In order to produce a precipitation-hardening type martensitic stainless steel sheet which satisfies at least one of the range (I) and the range (II), for example, Al, Ti, O in a molten steel, suitably a molten steel in the second refining step and the slag composition may be controlled.

### (3) Fatigue resistance

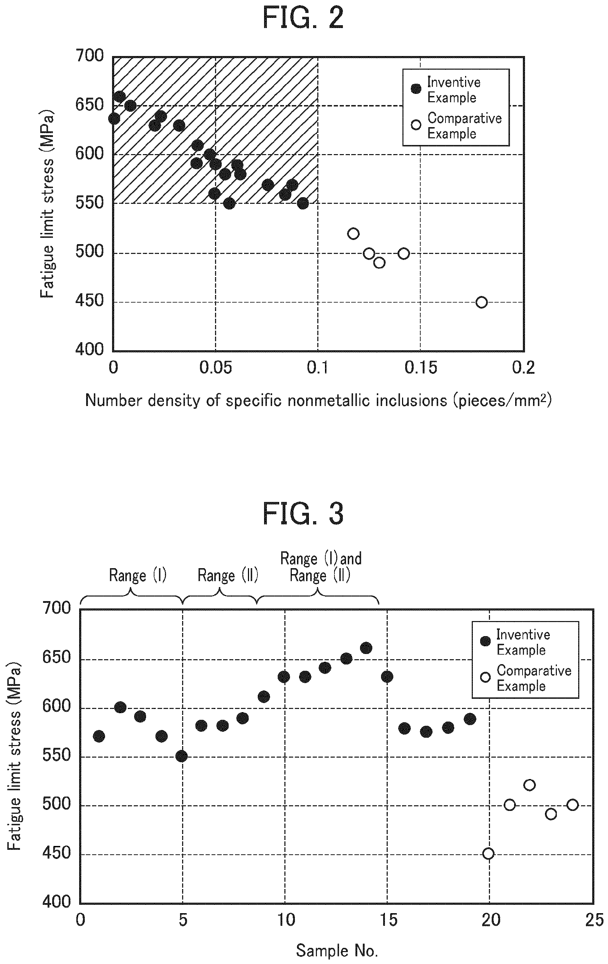

In the precipitation-hardening type martensitic stainless steel sheet of the present invention, when a stress at which the number of repetitions without breaking reaches 10 million times in a Schenck-type bending and torsion fatigue test is made a fatigue limit stress, the fatigue limit stress is preferably 550 MPa or more, and more preferably, it exceeds 600 MPa. FIG. 2 is a graph obtained by plotting the data of Inventive Examples and Comparative Examples with the number density of specific nonmetallic inclusions existing in a matrix phase (pieces/mm²) as a horizontal axis and the fatigue limit stress (MPa) as a vertical axis. From FIG. 2, it is revealed that when the number density of the specific nonmetallic inclusions is 0.100 pieces/mm² or less, the fatigue limit stress becomes as high as 550 MPa or more, and good fatigue resistance is obtained. In addition, FIG. 3 is a graph obtained by plotting a case where the range (I) is satisfied, a case where the range (II) is satisfied, a case where both the range (I) and range (II) are satisfied, and a case of a range other than the range (I) and range (II) as a horizontal axis, and the fatigue limit stress (MPa) as a vertical axis. From FIG. 3, it is revealed that when the range (I) is satisfied or when the range (II) is satisfied, the fatigue limit stress is 550 to 600 MPa, and when both the range (I) and range (II) are satisfied, the fatigue limit stress exceeds 600 MPa, and excellent fatigue resistance is obtained. It should be noted that the fatigue limit stress of a precipitation-hardening type martensitic stainless steel sheet is defined as follows. First, a test piece cut out of a stainless steel sheet with a thickness of 2.7 mm to 3.2 mm is subjected to a cycle fatigue test using a Schenck-type bending and torsion fatigue testing machine (capacity 39 N·m) under the conditions of test waveform: sinusoidal waveform, test speed: 60 Hz, test environment: room temperature in an atmosphere and stress ratio: R = -1 (reversible), the maximum stress at which the sample is not broken at 10 million (10⁷) times is measured, and this measured stress is defined as fatigue limit stress (MPa).

### (4) Method for producing precipitation-hardening type martensitic stainless steel sheet by one example of the present invention

A preferred method for producing the precipitation-hardening type martensitic stainless steel sheet of the present invention will now be described.

The precipitation-hardening type martensitic stainless steel sheet of the present invention can be produced by using general melting facility for stainless steels. The method for producing the precipitation-hardening type martensitic stainless steel sheet of the present invention is typically a method carried out in the order of a melting step (electric furnace), a first refining step (converter), a second refining step (AOD (Argon Oxygen Decarburization) or VOD (Vacuum Oxygen Decarburization)) and a casting step (continuous casting or ingot casting)). A case where raw materials for a stainless steel are melted in an electric furnace, then, the first refining is performed in a converter, then, the second refining is performed by the VOD, and then, the continuous casting is performed will now be described.

In the melting step, scrap and alloys used as raw materials for stainless steel are melted in an electric furnace to generate hot metal for the stainless steel, and the generated hot metal for the stainless steel is poured into a converter, which is a refining furnace.

In the first refining step, a rough decarburization treatment, in which carbon contained in the hot metal for the stainless steel is removed by blowing oxygen to it in the converter, is carried out to generate a molten stainless steel, and a slag including carbon oxides and impurities. The molten stainless steel generated in the first refining step is tapped into a molten steel pot and transferred to the second refining step, and the slag is removed at this time.

In the second refining step, the molten stainless steel is put in a vacuum degassing apparatus (VOD), which is a vacuum refining furnace, with the molten steel pot to carry out a finishing decarburization treatment. A pure molten stainless steel is generated by the finishing decarburization treatment of the molten stainless steel. In the vacuum degassing apparatus (VOD), decarburization and denitrification in particular are carried out to predetermined concentrations by oxygen blowing. A large amount of blown oxygen is dissolved in the molten steel at this time, and thus raw materials are adjusted and added so that the concentrations of oxidizable elements such as Al, Ti and Si will be predetermined concentrations after deoxidation. The composition of oxides in inclusions is determined by the concentrations of Al, Ti, Si, Mg, Ca and O in a molten steel and the composition of slag.

At this time, Mg is inevitably contained from refractories, and thus it is practically difficult to achieve an Mg concentration of 0. Therefore, in order to control the composition of oxides contained in nonmetallic inclusions to satisfy at least one range of the range (I) and the range (II), it is required to control Al, Ti, O and the composition of slag. The concentration of O in a molten steel is in general reduced with an increase in the concentration of Al in the molten steel. In addition, an increase in the concentration of Al in a molten steel promotes the reduction of MgO in refractories, and thus the concentration of Mg in the molten steel also increases.

As described above, when the concentrations of Al and Mg in a molten steel are high and the concentration of O is low, it is difficult to satisfy at least one range of the range (I) and the range (II). Therefore, the concentration of O is controlled by adjusting the amount of CaO added depending on the concentration of Al in the molten steel. CaO and Al₂O₃ exist in a slag, and as the ratio of CaO to Al₂O₃ (CaO/Al₂O₃) in the slag is reduced, the activity of Al₂O₃ increases and the concentration of O in the molten steel increases. As a result of various studies, it was revealed that it was effective to control the CaO/Al₂O₃ ratio to 1.0 to 2.0 when the concentration of Al in a molten steel was 0.020 to 0.040 mass%, and also to control the CaO/Al₂O₃ ratio to a narrower range, suitably 1.0 to 1.5, when the concentration of Al in a molten steel was above 0.040 mass% and 0.070 mass% or less, compared to when the concentration of Al in a molten steel was a lower 0.020 to 0.040 mass%.

In the casting step, continuous casting may be carried out by a common method. For example, the molten steel pot is taken out of the vacuum degassing apparatus (VOD) and set to a continuous casting apparatus (CC), and the molten stainless steel in the molten steel pot is poured into the continuous casting apparatus, and a slab-shaped stainless steel billet can be produced (cast) by a casting mold provided in the continuous casting apparatus. However, in order to suppress an increase in the concentration of N, it is desired to avoid the contact between the molten steel and the atmosphere as much as possible. Specifically, it is preferred to suppress an increase in the concentration of N by sealing the molten steel in a tundish (TD) using Ar gas and powders.

After that, the obtained slab-shaped stainless steel billet is subjected to hot working including hot rolling to obtain a hot-rolled steel sheet. It is only needed that the heating temperature of hot rolling be 1100 to 1250°C and the thickness of the hot-rolled steel sheet be for example,3.0 mm to 7.0 mm. Then, a precipitation-hardening type martensitic stainless steel sheet with excellent fatigue resistance can be obtained by annealing and pickling, cold rolling, and an aging treatment of this hot-rolled steel sheet. The cold rolling step may be carried out several times including an intermediate annealing step. After performing each heat treatment step, a pickling treatment is carried out, if necessary. The temperature of the heat treatment can be made, for example, 900 to 1100°C for 30 to 150 seconds, and the aging treatment can be made, for example, at 400 to 600°C for 10 to 80 minutes.

The embodiment of the present invention has been described above. It should be noted, however, that the present invention is not limited to the above embodiment. The present invention encompasses all aspects included in the concept and claims of the present invention, and can be modified to various aspects within the scope of the present invention.

### EXAMPLES

The inventive examples and comparative examples will now be described to further clarify the effect of the present invention. It should be noted, however, that the present invention is not limited to these examples.

### <Sample Nos. 1 to 19 (Inventive Examples) and sample Nos. 20 to 24 (Comparative Examples)>

First, raw materials for a stainless steel were melted in an electric furnace (melting step). In the melting step, scrap and alloys used as raw materials for the stainless steel are melted in an electric furnace to generate hot metal for the stainless steel, and the generated hot metal for the stainless steel is poured into a converter, which is a refining furnace, to carry out first refining (first refining step). In the first refining step, the rough decarburization treatment is carried out to remove carbon contained by blowing oxygen to the stainless steel hot metal in the converter, so that the stainless molten steel and slag containing carbon oxides and impurities are generated. Next, the stainless molten steel from which the slag has been removed is subjected to second refining which performs a finish decarburization treatment by the vacuum degassing apparatus (VOD) (second refining step). In the second refining step, decarburization and denitrification are carried out to predetermined concentrations by oxygen blowing in VOD. A large amount of blown oxygen is dissolved in the molten steel at this time, and thus raw materials are adjusted and added so that the concentrations of oxidizable elements such as Al, Ti and Si will be predetermined concentrations after deoxidation. Next, the molten steel having components adjusted to chemical composition shown in Table 1 was subjected to continuous casting to obtain a slab-shaped stainless steel billet. After that, the obtained stainless steel billet was hot-rolled at a temperature of 1100 to 1250°C, then annealed at 900 to 1100°C for 30 to 150 seconds, then pickled and cold-rolled, and then, aged at 400 to 600°C for 10 to 80 minutes to prepare a precipitation-hardening type martensitic stainless steel sheet (sample sheet) with a thickness of 1.0 to 3.5 mm.

### [Evaluation method]

Using each of the above test sheets, evaluations described below were made. Conditions of each evaluation are as follows.

### [1] Evaluation of nonmetallic inclusions

A small piece for observation having 40 mm square was taken from the center portion of the width in each of the obtained sample sheets, and the surfaces of the small pieces were polished with #120 to #1000 emery paper and then mirror-finished by buffing using diamond paste. The surface of the mirror-finished small piece was observed at 400 to 500 arbitrary locations in a visual field region (square region of about 32 mm x about 32 mm) having a visual field area of 1000 mm² at a magnification of 100 times by using an energy dispersive X-ray analyzer (EDX). The observation target was made specific nonmetallic inclusions with the equivalent circle diameter of 10 µm or more, and the whole of the observed inclusions was analyzed by EDX. The inclusions were considered to be one if they were integrated, and in cases where they were not integrated but were close to each other, they were defined as the same inclusion if the shortest distance between the adjacent inclusions is shorter than the smaller equivalent circle diameter of the adjacent inclusions, and were defined as separate inclusions if the shortest distance between the adjacent inclusions is longer than the smaller equivalent circle diameter of the adjacent inclusions. The analysis values were corrected by the ZAF method. The number density of the specific nonmetallic inclusions (pieces/mm²) was calculated as the number of specific nonmetallic inclusions per visual field area (1000 mm²). The composition of the specific nonmetallic inclusions was calculated as follows, and the mass percentages (mass%) when the total mass of Al₂O₃, MgO and Ti₂O₃ was made 100 mass% were determined. First, the amount of TiN in specific nonmetallic inclusions was determined from the concentration of N in the EDX analysis by the stoichiometric ratio. Specifically, the concentration of Ti existing (consumed) as TiN was calculated as Ti* from "N concentration (analysis value) x Ti atomic weight/N atomic weight". Next, the concentration of Ti existing as Ti oxides was calculated as the concentration of Tiₒₓ by subtracting the Ti* value from the concentration of Ti (analysis value). Next, the values of the concentration of Al and the concentration of Mg and the concentration of Tiₒₓ obtained by the EDX analysis were converted into Al₂O₃, MgO and Ti₂O₃. Finally, the mass percentages (mass%) when the total mass of Al₂O₃, MgO and Ti₂O₃ was made 100 mass% were determined. Table 2 shows the number density of the specific nonmetallic inclusions (pieces/mm²), the presence or absence of the specific nonmetallic inclusions with the equivalent circle diameter of above 20 um, the mass percentages of Al₂O₃, MgO and Ti₂O₃ in specific nonmetallic inclusions, and the ranges shown in FIG. 1. In addition, the mass percentages of Al₂O₃, MgO and Ti₂O₃ in the specific nonmetallic inclusions in sample Nos. 1 to 24 were plotted in the ternary phase diagram for Al₂O₃-MgO-Ti₂O₃ shown in FIG. 1.

### [2] Evaluation of fatigue resistance

A fatigue test piece with a predetermined size, making the longitudinal direction the rolling direction, was cut out of each sample sheet, and the surface and end face of the fatigue test piece were dry-polished with #600 emery paper. Subsequently, it was subjected to a heat treatment at 480°C for an hour, and then air-cooled to normal temperature. The fatigue test was carried out by a Schenck-type bending and torsion fatigue testing machine. The test was finished when the test piece was broken or the number of repetitions reached 10 million times, and the stress at which the number of repetitions without breaking reached 10 million times was made a fatigue limit stress (MPa). The test environment was made room temperature in the atmosphere. Evaluations were made as "Excellent" (indicated by bullseye symbol (⊙)) when the fatigue limit stress was above 600 MPa, "Good" (indicated by circle symbol (o)) when the fatigue limit stress was 550 MPa or more and 600 MPa or less, and "Poor" (indicated by cross symbol (x)) when the fatigue limit stress was less than 550 MPa. The evaluation results are shown in Table 2. In addition, FIG. 2 shows a graph obtained by plotting the fatigue limit stress to the number density of the specific nonmetallic inclusions existing in a matrix phase in No. 1 to 24. Furthermore, FIG. 3 shows a graph obtained by plotting the fatigue limit stress of No. 1 to 24.

**[Table 1]**

| Sample No. | Chemical composition | | | | | | | | | | | | | | (mass%) | Comment |
|---|---|---|---|---|---|---|---|---|---|---|---|---|---|---|---|---|
| | C | Si | Mn | Ni | Cr | P | s | Cu | Mo | Ti | Al | Ca | Mg | N | O | |
| 1 | 0.038 | 1.49 | 0.27 | 6.86 | 13.68 | 0.026 | 0.001 | 0.60 | 0.81 | 0.36 | 0.030 | 0.0005 | 0.0005 | 0.009 | 0.0034 | Inventive Examples |
| 2 | 0.035 | 1.50 | 0.24 | 7.08 | 13.76 | 0.027 | 0.001 | 0.71 | 0.74 | 0.37 | 0.025 | 0.0011 | 0.0003 | 0.006 | 0.0038 | |
| 3 | 0.040 | 1.47 | 0.19 | 6.98 | 13.76 | 0.029 | 0.001 | 0.70 | 0.75 | 0.36 | 0.031 | 0.0004 | 0.0006 | 0.011 | 0.0025 | |
| 4 | 0.078 | 1.47 | 0.25 | 6.91 | 13.79 | 0.024 | 0.001 | 0.65 | 0.78 | 0.30 | 0.032 | 0.0003 | 0.0004 | 0.008 | 0.0070 | |
| 5 | 0.040 | 2.40 | 0.27 | 6.78 | 13.69 | 0.028 | 0.002 | 0.71 | 0.79 | 0.34 | 0.035 | 0.0002 | 0.0006 | 0.014 | 0.0028 | |
| 6 | 0.042 | 1.47 | 2.90 | 6.92 | 13.78 | 0.024 | 0.001 | 0.70 | 0.74 | 0.32 | 0.070 | 0.0008 | 0.0001 | 0.007 | 0.0029 | |
| 7 | 0.043 | 1.43 | 0.88 | 9.70 | 13.64 | 0.027 | 0.001 | 0.71 | 0.79 | 0.44 | 0.044 | 0.0007 | 0.0005 | 0.011 | 0.0017 | |
| 8 | 0.042 | 1.47 | 0.26 | 7.00 | 16.80 | 0.026 | 0.001 | 0.67 | 2.80 | 0.28 | 0.027 | 0.0006 | 0.0007 | 0.008 | 0.0021 | |
| 9 | 0.035 | 1.52 | 0.20 | 6.86 | 13.76 | 0.025 | 0.003 | 1.90 | 0.80 | 0.31 | 0.025 | 0.0009 | 0.0010 | 0.006 | 0.0020 | |
| 10 | 0.040 | 0.70 | 0.19 | 6.00 | 13.67 | 0.028 | 0.001 | 0.63 | 0.77 | 0.34 | 0.040 | 0.0015 | 0.0014 | 0.005 | 0.0066 | |
| 11 | 0.044 | 1.50 | 0.24 | 6.90 | 10.05 | 0.031 | 0.001 | 0.50 | 0.80 | 0.35 | 0.030 | 0.0001 | 0.0003 | 0.007 | 0.0025 | |
| 12 | 0.039 | 1.44 | 0.16 | 6.90 | 13.67 | 0.026 | 0.001 | 0.69 | 0.50 | 0.15 | 0.032 | 0.0005 | 0.0012 | 0.008 | 0.0022 | |
| 13 | 0.039 | 1.42 | 0.19 | 7.04 | 13.79 | 0.025 | 0.001 | 0.72 | 0.79 | 0.36 | 0.022 | 0.0020 | 0.0004 | 0.010 | 0.0031 | |
| 14 | 0.039 | 1.50 | 0.26 | 7.01 | 13.83 | 0.027 | 0.001 | 0.71 | 0.75 | 0.36 | 0.025 | 0.0002 | 0.0020 | 0.007 | 0.0018 | |
| 15 | 0.041 | 1.47 | 0.30 | 7.07 | 13.75 | 0.039 | 0.001 | 0.70 | 0.76 | 0.32 | 0.052 | 0.0018 | 0.0004 | 0.013 | 0.0013 | |
| 18 | 0.043 | 1.51 | 0.28 | 6.85 | 13.95 | 0.031 | 0.001 | 0.68 | 0.82 | 0.35 | 0.031 | 0.0009 | 0.0017 | 0.008 | 0.0027 | |
| 17 | 0.037 | 1.53 | 0.26 | 7.05 | 13.86 | 0.031 | 0.001 | 0.70 | 0.74 | 0.34 | 0.028 | 0.0010 | 0.0006 | 0.009 | 0.0030 | |
| 18 | 0.040 | 1.48 | 0.26 | 6.98 | 13.90 | 0.032 | 0.001 | 0.72 | 0.74 | 0.32 | 0.031 | 0.0005 | 0.0004 | 0.010 | 0.0021 | |
| 19 | 0.041 | 1.50 | 0.25 | 7.12 | 13.74 | 0.030 | 0.002 | 0.69 | 0.75 | 0.32 | 0.030 | 0.0003 | 0.0007 | 0.008 | 0.0023 | |
| 20 | 0.042 | 1.48 | 0.24 | 6.92 | 13.74 | 0.027 | 0.001 | 0.68 | 0.78 | 0.42 | 0.041 | 0.0016 | 0.0008 | **0.016** | 0.0028 | Comparative Examples |
| 21 | 0.040 | 1.45 | 0.26 | 6.98 | 13.77 | 0.028 | 0.001 | 0.69 | 0.76 | 0.34 | 0.024 | **0.0030** | 0.0009 | 0.008 | 0.0028 | |
| 22 | 0.040 | 1.47 | 0.22 | 7.02 | 13.77 | 0.028 | 0.001 | 0.69 | 0.79 | 0.34 | 0.051 | 0.0003 | 0.0006 | 0.011 | 0.0012 | |
| 23 | 0.039 | 1.47 | 0.36 | 6.98 | 13.84 | 0.030 | 0.001 | 0.68 | 0.80 | 0.33 | 0.048 | 0.0004 | 0.0011 | 0.007 | 0.0018 | |
| 24 | 0.042 | 1.52 | 0.28 | 7.05 | 13.75 | 0.029 | 0.002 | 0.71 | 0.78 | 0.34 | 0.028 | 0.0006 | 0.0019 | 0.008 | 0.0016 | |

| | | | | | | | | | | | | | | | | |
|---|---|---|---|---|---|---|---|---|---|---|---|---|---|---|---|---|
| (Note) Underlined boldface text in Table indicates item outside appropriate ranges of the present invention. | | | | | | | | | | | | | | | | |

**[Table 2]**

| Sample No. | Specific nonmetallic inclusions | | | | | | Fatigue resistance | | Production conditions | Comment |
|---|---|---|---|---|---|---|---|---|---|---|
| | Number density of specific nonmetallic inclusions with equivalent circle diameter of 10 µm or more (pieces/mm²) | Presence or absence of specific nonmetallic inclusions with equivalent circle diameter above 20 µm | Mass percentage (%) | | | Ranges shown in FIG. 1 | Fatigue limit stress (MPa) | Evaluation | CaO/Al₂O₃ ratio in slag after second refining step | |
| | | | Al₂O₃ | MgO | Ti₂O₃ | | | | | |
| 1 | 0.076 | no | 76.2 | 10.5 | 13.3 | (II) | 570 | ○ | 1.48 | Inventive Examples |
| 2 | 0.048 | no | 74.9 | 6.7 | 18.4 | (II) | 600 | ○ | 1.78 | |
| 3 | 0.061 | no | 69.0 | 2.1 | 33.8 | (II) | 590 | ○ | 1.55 | |
| 4 | 0.088 | no | 59.9 | 9.7 | 30.4 | (II) | 570 | ○ | 1.05 | |
| 5 | 0.093 | no | 56.8 | 10.5 | 32.7 | (II) | 550 | ○ | 1.50 | |
| 6 | 0.063 | no | 21.7 | 30.1 | 48.2 | (I) | 580 | ○ | 1.18 | |
| 7 | 0.055 | no | 16.3 | 2.9.3 | 54.3 | (I) | 580 | ○ | 1.48 | |
| 8 | 0.050 | no | 6.3 | 18.8 | 75.0 | (I) | 590 | ○ | 1.88 | |
| 9 | 0.042 | no | 44.3 | 5.5 | 50.2 | (I), (II) | 610 | ⊙ | 1.95 | |
| 10 | 0.033 | no | 40.3 | 0.0 | 59.7 | (I), (II) | 630 | ⊙ | 1.14 | |
| 11 | 0.021 | no | 31.3 | 5.2 | 63.5 | (I), (II) | 630 | ⊙ | 1.63 | |
| 12 | 0.024 | no | 18.0 | 7.2 | 74.9 | (I), (II) | 640 | ⊙ | 1.71 | |
| 13 | 0.009 | no | 14.6 | 2.4 | 82.9 | (I), (II) | 650 | ⊙ | 1.84 | |
| 14 | 0.009 | no | 6.2 | 0.0 | 93.8 | (I), (II) | 660 | ⊙ | 1.66 | |
| 15 | 0 | - | - | - | - | - | 630 | ⊙ | 1.22 | |
| 16 | 0.085 | no | 44.9 | 21.8 | 33.3 | other than (I) and (II) | 560 | ○ | 1.75 | |
| 17 | 0.061 | yes | 6.7 | 47.2 | 46.1 | (I) | 550 | ○ | 1.40 | |
| 18 | 0.049 | yes | 66.7 | 17.8 | 15.6 | (II) | 560 | ○ | 1.58 | |
| 19 | 0.038 | yes | 27.2 | 4.9 | 67.9 | (I), (II) | 580 | ○ | 1.44 | |
| 20 | **0.180** | yes | 58.7 | 21.3 | 20.0 | (II) | 450 | × | 1.47 | Comparative Examples |
| 21 | **0.142** | yes | 45.0 | 16.3 | 88.8 | (II) | 500 | × | 1.94 | |
| 22 | **0.118** | yes | 34.5 | 48.3 | 17.2 | other than (1) and (II) | 520 | × | 1.71 | |
| 23 | **0.130** | yes | 54.2 | 41.7 | 4.2 | other (II) | 490 | × | 1.63 | |
| 24 | **0.125** | yes | 51.1 | 37.2 | 11.7 | other than (I) and (II) | 500 | × | 2.18 | |

| | | | | | | | | | | |
|---|---|---|---|---|---|---|---|---|---|---|
| (Note) Underlined boldface text in Table indicates item outside appropriate ranges of the present invention. | | | | | | | | | | |

From the results shown in Tble 1 and Table 2, and FIGS. 1 to 3, as in all of sample Nos. 1 to 19 which are Inventive Examples, the chemical composition and the number density of specific nonmetallic inclusions were within appropriate ranges, the fatigue limit stress was 550 MPa or more, and the fatigue resistance was equal to or higher than Good. In particular, sample No. 15 has no specific nonmetallic inclusions, and also, in sample Nos. 9 to 14, the mass percentages of Al₂O₃, MgO and Ti₂O₃ in the specific nonmetallic inclusions satisfy both the ranges (I) and (II), and hence, sample Nos. 9 to 14 had a fatigue limit stress of above 600 MPa, and had the excellent fatigue resistance. On the other hand, in all of sample Nos. 20 to 24, which are Comparative Examples, as the number density of the specific nonmetallic inclusions was out of the appropriate range, the fatigue limit stress was less than 550 MPa and the fatigue resistance was poor.

For reference, sample Nos. 1 to 19 which are Inventive Examples, and sample Nos. 20 to 24 which are Comparative Examples were plotted on the ternary phase diagram for Al₂O₃-MgO-Ti₂O₃ shown in FIG. 1.

FIG. 4 is a reflected electron compositional image of nonmetallic inclusions of 10 µm or more existing in the stainless steel sheet in sample No. 23 which is Comparative Example. The portion that looks black in FIG. 4 is the portion of oxide composition A including MgO and MgO·Al₂O₃ (spinel)-based oxide, and the portion that looks gray in FIG.4 is TiN. In addition, FIG. 5 is a reflected electron compositional image of nonmetallic inclusions 10 µm or more existing in the stainless steel sheet in sample No. 11 which is Inventive Example. The portion that looks black in FIG. 5 is the portion of oxide composition B including Ti₂O₃ and Al₂O₃ oxide, and the portion that looks gray in FIG.5 is TiN.

In the case of Comparative Example (sample No. 23) shown in FIG. 4, TiN (the gray portion in Fig. 4) grows around the oxide composition A including MgO and MgO·Al₂O₃ (spinel)-based oxide (the black portion in FIG. 4), and coarse nonmetallic inclusions are generated. On the other hand, it is revealed that in the case of Inventive Example (sample No. 11) shown in FIG. 5, the amount of TiN (the gray portion in FIG. 5) generated around the oxide composition B including Ti₂O₃ and Al₂O₃ oxide composition B (the black portion in FIG. 5) is small.

## Claims

1. A precipitation-hardening type martensitic stainless steel sheet with excellent fatigue resistance, having a composition comprising, by mass%, C: 0.080% or less, Si: 0.70 to 3.00%, Mn: 3.00% or less, Ni: 6.00 to 10.00%, Cr: 10.00% to 17.00%, P: 0.050% or less, S: 0.003% or less, Cu: 0.50 to 2.00%, Mo: 0.50 to 3.00%, Ti: 0.15 to 0.45%, Al: 0.070% or less, Ca: 0.0020% or less, Mg: 0.0020% or less, N: 0.015% or less, and O: 0.0070% or less, with the balance being Fe and inevitable impurities,
wherein, among nonmetallic inclusions existing in a matrix phase, nonmetallic inclusions with an equivalent circle diameter of 10 um or more are not present, or even when the nonmetallic inclusions with the equivalent circle diameter of 10 um or more are present, a number density thereof is 0.100 pieces/mm² or less.

2. The precipitation-hardening type martensitic stainless steel sheet according to claim 1, wherein, when a total mass of Al₂O₃, MgO and Ti₂O₃ obtained by analyzing average composition components of compounds contained in the nonmetallic inclusions with the equivalent circle diameter of 10 um or more is made 100 mass%, mass percentages (%) of Al₂O₃, MgO and Ti₂O₃ satisfy at least one range of range (I) obtained from formulae (1) to (3) and range (II) obtained from formulae (4) to (6) shown below:
<Range (I)>
[Al₂O₃] + [MgO] + [Ti₂O₃] = 100 ··· (1)
[Ti₂O₃] ≥ 40 (2)
[Al₂O₃] + [MgO] ≤ 60 (3)
<Range (II)>
[Al₂O₃] + [MgO] + [Ti₂O₃] = 100 ···· (4)
0 ≤ [Ti₂O₃] ≤ 100 .................. (5)
[Al₂O₃]/102 ≥ [MgO]/40.3 ·········· (6),
and in the formulae, [Al₂O₃], [MgO] and [Ti₂O₃] all mean mass percentage (%).

3. The precipitation-hardening type martensitic stainless steel sheet according to claim 1 or 2, wherein the nonmetallic inclusions with the equivalent circle diameter of 10 um or more existing in the matrix phase have the equivalent circle diameter of 20 um or less.

4. The precipitation-hardening type martensitic stainless steel sheet according to claim 1, 2 or 3, wherein when a stress at which a number of repetitions without breaking reaches 10 million times in a Schenck-type bending and torsion fatigue test is made a fatigue limit stress, the fatigue limit stress is 550 MPa or more.
